# EUROPÄISCHE PATENTSCHRIFT

(11) **EP 3 135 088 B1**
(45) Veröffentlichungstag und Bekanntmachung des Hinweises auf die Patenterteilung: **26.09.2018**
(21) Anmeldenummer: 16184765.2
(22) Anmeldetag: 18.08.2016
(51) Int. Cl.: A01C 7/04, A01C 7/16, A01C 7/08

(54) **DOSIERVORRICHTUNG FÜR GRANULARES MATERIAL MIT AXIALER VORDOSIERUNG**
DOSING DEVICE FOR GRANULAR MATERIAL WITH AXIAL PREDOSAGE
DISPOSITIF DE DOSAGE POUR MATERIAU GRANULAIRE COMPRENANT UN PRE-DOSAGE AXIAL

(30) Priorität: 26.08.2015 DE 102015114149
(43) Veröffentlichungstag der Anmeldung: 01.03.2017
(73) Patentinhaber: Amazonen-Werke H. Dreyer GmbH & Co. KG, 49205 Hasbergen (DE)
(72) Erfinder: Johannaber, Stefan Jan, 49536 Lienen (DE); Teckemeyer, Stephan, 49504 Lotte (DE)

(56) Entgegenhaltungen:
- DE-A1-102008 061 819
- DE-A1-102012 105 048
- US-A- 5 082 141

## Beschreibung

Die Erfindung betrifft eine Dosiervorrichtung für granulares Material, insbesondere für Saatgut.

Derartige Vorrichtungen finden in landwirtschaftlichen Sämaschinen Anwendung, um Saatgut in definierten Mengen an Abgabeelemente weiterzuleiten und dann auf einer landwirtschaftlichen Fläche abzulegen. Für bestimmtes Saatgut, beispielsweise Mais, ist es wünschenswert, einzelne Körner in vorherbestimmten Abständen abzulegen. Um das Saatgut zu vereinzeln, verwenden bekannte Dosiervorrichtungen eine mit einer Druckdifferenz beaufschlagbare Vereinzelungstrommel oder Vereinzelungsscheibe. Die Vereinzelungstrommel oder Vereinzelungsscheibe umfasst in Perforationsreihen angeordnete Perforationen, an denen sich das Saatgut anlagern kann, wodurch es zu einer Vereinzelung kommt.

Diese Vereinzelungstechnik ist jedoch nicht zufriedenstellend für Getreide, wie etwa Weizen, Roggen, Gerste, Hafer oder Raps anwendbar. Eine speziell auf einen derartigen Einsatz gerichtete Dosiervorrichtung ist daher aus der

DE 10 2012 105 048 A1 bekannt geworden. Diese Dosiervorrichtung umfasst eine in einem Gehäuse konzentrisch rotierende Fördereinrichtung, die annähernd tangential an eine Innenmantelfläche des Gehäuses anschließt. In der Fördereinrichtung sind Taschen gebildet, in denen Körner des Saatguts gedrängt und kreisförmig befördert werden, bis in einem weiteren Gehäusebereich durch eine veränderte Kontur der Innenmantelfläche des Gehäuses und unter Zentrifugalkrafteinflüssen nur jeweils ein einzelnes Korn in der Tasche verbleibt, während überschüssige Körner abgesondert und zur erneuten Förderung in einen ersten Gehäusebereich zurückgeführt werden.

Bei diesen Dosiervorrichtungen werden üblicherweise ein Zentraldosierer und ein damit verbundener Verteilerkopf verwendet, um das Saatgut der Fördereinrichtung zuzuführen. Das Saatgut wird dabei vom Verteilerkopf aus mit einer Luftströmung tangential in das Gehäuse der Dosiervorrichtung eingebracht. Die bereits mit einer gewissen Geschwindigkeit geförderten Körner treffen dort auf die schnell rotierende Fördereinrichtung, was zu Beschädigungen der Körner des granularen Materials führen kann. Aufgabe der Erfindung ist es daher, eine Dosierungsvorrichtung für granulares Material, insbesondere Saatgut, bereitzustellen, welche eine schonendere Behandlung des granularen Materials ermöglicht.

Diese Aufgabe wird durch eine Dosiervorrichtung gemäß Patentanspruch 1 gelöst. Weitere vorteilhafte Ausgestaltungen der Erfindung sind in den abhängigen Ansprüchen angegeben.

Gemäß der Erfindung ist es also vorgesehen, dass die Dosiervorrichtung eine Vordosiereinheit umfasst, die über eine Seitenwand des Gehäuses in das Gehäuse mündet, und mit der granulares Material in das Gehäuse gefördert werden kann. Die Vordosiereinheit umfasst dabei einen Rotor, dessen Drehachse mit der Drehachse der Fördereinrichtung einen Winkel kleiner als 10° einschließt. Dadurch kann die Vordosiereinheit das granulare Material von der Mitte aus auf die drehbar gelagerte Fördereinrichtung aufgeben, wodurch wiederum eine schonendere Behandlung des granularen Materials möglich ist. Über die Vordosiereinheit kann das granulare Material darüber hinaus bereits in eine Drehbewegung versetzt werden, so dass die Relativgeschwindigkeit zwischen der Fördereinrichtung und dem granularen Material bei dessen Aufgabe minimiert wird. Dadurch können Beschädigungen des granularen Materials weiter verhindert oder wenigstens minimiert werden.

Bei dem granularen Material kann es sich insbesondere um Saatgut handeln, alternativ oder zusätzlich jedoch auch um granulares Düngemittel oder granulares Pestizid. Das Saatgut kann insbesondere Saatgut für Getreide, wie etwa Weizen, Roggen, Gerste, Hafer oder Raps, sein.

Durch die Vordosiereinheit kann bereits eine gewisse Vordosierung erzielt werden. Der Rotor kann insbesondere mit Förderelementen der Vordosiereinheit so zusammenwirken, dass eine definierte Menge des granularen Materials pro Zeiteinheit in das Gehäuse einbringbar ist. Die definierte Menge kann insbesondere dahingehend definiert sein, dass sie innerhalb eines vorherbestimmten Anzahlbereichs oder Volumenbereichs liegt. Der Winkel zwischen der Drehachse des Rotors und der Drehachse der Fördereinrichtung kann insbesondere auch kleiner als 5° sein. Die Drehachse des Rotors der Vordosiereinheit kann auch koaxial zur Drehachse der Fördereinrichtung verlaufen.

Der Rotor der Vordosiereinheit und die Fördereinrichtung können durch einen gemeinsamen Antrieb antreibbar sein. Dadurch kann der apparative Aufwand minimiert werden.

Der Rotor der Vordosiereinheit kann insbesondere unmittelbar oder direkt durch den gemeinsamen Antrieb antreibbar sein. Mit anderen Worten kann auf ein Getriebe verzichtet werden. Der Antrieb des Rotors kann also direkt von der Antriebswelle der Fördereinrichtung aus erfolgen. Dadurch ist ein besonders einfacher Aufbau der Dosiervorrichtung möglich. Die Antriebswelle der Fördereinrichtung kann auch selbst den Rotor der Vordosiereinheit bilden.

Die Dosiervorrichtung kann also einen Motor oder Antrieb zum Antreiben der Fördereinrichtung und der Vordosiereinheit umfassen, insbesondere wobei der Motor oder Antrieb hinsichtlich seiner Drehzahl regelbar oder steuerbar ist. Es ist aber auch möglich, dass die Dosiervorrichtung zwei separate Motoren oder Antriebe zum Antreiben der Fördereinrichtung und der Vordosiereinheit umfasst. Jeder der Motoren oder Antriebe kann hinsichtlich seiner Drehzahl regelbar oder steuerbar sein.

Die Vordosiereinheit kann ein Schneckengewinde umfassen, das durch den Rotor oder Läufer antreibbar ist. Mit anderen Worten können die oben genannten Förderelemente ein Schneckengewinde umfassen oder dem Schneckengewinde entsprechen. Dadurch ist einerseits eine volumetrische Vordosierung möglich, andererseits kann das granulare Material bereits in gewissem Maße in eine Rotationsbewegung übergeführt werden.

Alternativ kann die Vordosiereinheit auch ein Innengewinde umfassen, das durch den Rotor antreibbar ist. Mit anderen Worten können die oben genannten Förderelemente ein Innengewinde umfassen oder dem Innengewinde entsprechen. Dies ist eine apparativ besonders einfache und daher vorteilhafte Lösung.

Erfindungsgemäß umfasst die Vordosiereinheit eine Schleuse für das granulare Material. Dadurch kann eine Luftströmung zwischen einer Zuführöffnung und einer Auslassöffnung des Gehäuses der Dosiervorrichtung minimiert oder vermieden werden. Die Zuführöffnung kann so ausgebildet sein, dass über sie granulares Material in das Gehäuse einbringbar ist. Die Auslassöffnung kann im Abgabebereich so angeordnet sein, dass über sie durch die Fördereinrichtung in den Abgabebereich gefördertes granulares Material aus dem Gehäuse ausgebracht werden kann. Die Schleuse kann zwischen der Zuführöffnung und der Auslassöffnung angeordnet sein.

Die Schleuse kann eine durch eine erste Wandung begrenzte Innenkammer und eine durch eine zweite Wandung begrenzte Außenkammer, welche die Innenkammer umgibt, umfassen, wobei in der Innenkammer und der Außenkammer jeweils wenigstens ein um die Drehachse drehbarer Mitnehmer angeordnet ist, wobei die erste Wandung eine erste Öffnung und die zweite Wandung eine zweite Öffnung aufweist, und wobei die erste Öffnung und die zweite Öffnung so versetzt zueinander angeordnet sind, dass sie sich von der Drehachse aus gesehen in radialer Richtung nicht überlappen.

Die Schleuse, insbesondere die Mitnehmer der Schleuse, ist durch den Rotor antreibbar.

Durch die drehbaren Mitnehmer der Schleuse kann das granulare Material vorteilhafterweise in die Drehbewegung um die Drehachse versetzt werden, so dass die Relativbewegung zwischen der Fördereinrichtung und dem eingebrachten granularen Material minimiert und so das granulare Material möglichst schonend behandelt wird. Durch die versetzte Anordnung der Öffnungen kann ein Luftstrom zwischen der Zuführöffnung und der Auslassöffnung im Gehäuse der Dosiervorrichtung minimiert werden. Dies ist besonders vorteilhaft, wenn die Dosiervorrichtung zusammen mit einem Nursingsystem eingesetzt werden soll. Im Falle der Verwendung eines Nursingsystems wird die Zuführung von granularem Material an die Dosiervorrichtung nämlich über den Luftstrom selbst geregelt.

Die Vordosiereinheit kann so ausgebildet sein, dass granulares Material wahlweise direkt, unter Umgehung der Fördereinrichtung, an eine an die Dosiervorrichtung anschließende Abgabevorrichtung geleitet werden kann. Dies kann insbesondere für schwer zu vereinzelnde Saatgüter, wie beispielsweise Grassamen oder Saatgutmischungen vorteilhaft sein.

Beispielsweise können der Rotor und/oder die Förderelemente der Vordosiereinheit austauschbar sein. Dadurch ist es möglich, den Rotor beispielsweise gegen eine Rutsche oder andere Einsätze auszutauschen, welche unmittelbar in die Auslassöffnung des Gehäuses münden. Alternativ oder zusätzlich können Elemente der Vordosierung insbesondere in ihrer Lage so verstellbar sein, dass von der Vordosiereinheit ausgegebenes granulares Material direkt oder unmittelbar in die Auslassöffnung des Gehäuses förderbar ist.

Die Vordosiereinheit kann einen Sammelbehälter für granulares Material umfassen. Dieser Sammelbehälter kann insbesondere außerhalb des Gehäuses der Dosiervorrichtung angeordnet sein. Durch diesen Sammelbehälter ist es möglich, die Vordosiereinheit aus einem ruhenden Saatgutvorrat heraus zu beschicken. Außerdem ermöglicht der Sammelbehälter eine Verwendung eines Nursingsystems zum Nachfüllen des Sammelbehälters. Insbesondere können in der Wandung des Sammelbehälters eine Vielzahl von Durchlassöffnungen vorgesehen sein. Diese Durchlassöffnungen können ein sogenanntes "Nursingsieb" bilden. Wenn Körner im Sammelbehälter die Durchlassöffnungen bedecken, wird der Förderluftstrom unterbrochen, wodurch die Nachlieferung oder Nachförderung von granularem Material aus einem zentralen Behältnis durch das Nursingsystem gestoppt wird. Eine derartige Saatgutzuführung an den Sammelbehälter ermöglicht einen einfacheren Aufbau, da auf einen Zentraldosierer mit Verteilerkopf verzichtet werden kann. Durch die Durchlassöffnungen ist das Nursingsystem selbstregulierend.

Der Sammelbehälter kann über eine Rückleitung mit dem Gehäuse verbunden sein, über die Körner des granularen Materials vom Gehäuse in den Sammelbehälter gefördert werden können. Diese Rückführung von nicht benötigtem granularen Material in den Sammelbehälter kann eine bedarfsgerechte Nachlieferung von granularem Material über das Nursingsystem ermöglichen oder verbessern.

Die Dosiervorrichtung, insbesondere die Fördereinrichtung, kann einen Zentrierschieber umfassen, der granulares Material entlang einer Führungsfläche eines Führungselements vom Aufnahmebereich in den Abgabebereich schiebt und dabei ein Korn zentriert, indem er es beidseitig abstützt oder führt. Nicht zentrierte Körner, die im Aufnahmebereich aufgenommen und entlang der Führungsfläche transportiert werden, können infolge ausgesondert werden, sodass im Abgabebereich das zentrierte Korn verbleibt und an ein Abgabeelement zur Ablage auf einer landwirtschaftlichen Fläche weitergeleitet werden kann. Insbesondere kann genau ein Korn durch den Zentrierschieber zentriert geführt werden. Die Dosiervorrichtung kann also eine Vereinzelungsvorrichtung sein.

Die Angabe "beidseitig abstützt oder führt" bedeutet, dass der Zentrierschieber Elemente umfasst, welche das zentrierte Korn an beiden Seiten (auf die Drehrichtung des Zentrierschiebers bezogen) abstützen oder führen. Damit kann eine Bewegung des Korns quer zur Drehrichtung reduziert oder vermieden werden, sodass das zentrierte Korn im Wesentlichen entlang einer vorbestimmten Bewegungsbahn vom Aufnahmebereich in den Abgabebereich geschoben wird. Um das Korn seitlich zu führen ist es nicht erforderlich, dass der Zentrierschieber stets in direktem Kontakt mit dem Korn steht. Es ist ausreichend, wenn der Zentrierschieber verhindert, dass das Korn einen vorherbestimmten seitlich begrenzten Bereich verlässt.

Als Drehrichtung wird die Bewegungsrichtung bezeichnet, in der sich der Zentrierschieber im Betrieb der Dosiervorrichtung bewegt. Mit anderen Worten bezeichnet die Drehrichtung die Richtung der Vorwärtsbewegung des Zentrierschiebers. Wenn sich der Zentrierschieber entlang einer Kreisbahn bewegt, ist die Bewegungsrichtung an jedem Punkt der Kreisbahn tangential zu dieser. Die Angaben "seitlich" oder "beidseitig" beziehen sich daher auf die Bereiche quer zur Drehrichtung.

Die Angabe "wenigstens teilweise" bedeutet in diesem Zusammenhang, dass der Zentrierschieber das Korn nicht durchgehend vom Aufnahmebereich bis zum Abgabebereich beidseitig abstützen oder führen muss. Beispielsweise kann es Zeit in Anspruch nehmen, bis sich das Korn so relativ zum Zentrierschieber ausgerichtet hat, dass eine beidseitige Abstützung oder Führung möglich ist. Während dieser Zeit kann das Korn bereits einen gewissen Weg vom Aufnahmebereich zum Abgabebereich bewegt werden. Das Korn kann aber auch entlang des gesamten Wegs beidseitig abgestützt oder geführt werden.

Der Zentrierschieber kann auch ein oder mehrere Elemente umfassen, welche das zentrierte Korn in Drehrichtung gesehen nach hinten abstützen. Die Elemente, welche die seitliche Abstützung oder Führung bewirken können zugleich auch die Abstützung nach hinten gewährleisten.

Der Zentrierschieber kann so drehbar in dem Gehäuse gelagert sein, dass er entlang einer Kreisbahn bewegbar ist, wobei das Führungselement wenigstens teilweise entlang der Kreisbahn verläuft, und wobei die Breite der Führungsfläche vom Aufnahmebereich zum Abgabebereich hin abnimmt.

Durch die abnehmende Breite der Führungsfläche können die Körner, welche nicht durch den Zentrierschieber zentriert werden, im Laufe der Bewegung vom Aufnahmebereich in den Abgabebereich aufgrund der wegfallenden Stütze durch die Führungsfläche unter Zentrifugalkrafteinflüssen und/oder Schwerkrafteinflüssen ausgesondert werden. Diese können zur erneuten Förderung in den Aufnahmebereich zurückgeführt werden, insbesondere durch Trägheit und/oder unter Schwerkrafteinfluss. Auch die Breite des Führungselements insgesamt kann vom Aufnahmebereich zum Abgabebereich hin abnehmen.

Der Zentrierschieber kann so im Gehäuse gelagert sein, dass die Kreisbahn im Betrieb der Dosiervorrichtung im Wesentlichen vertikal verläuft. Mit anderen Worten kann die Drehachse, um die der Zentrierschieber rotiert, horizontal verlaufen, insbesondere im Betrieb parallel zum zu bearbeitenden Boden. Insbesondere kann die Drehachse mit der Horizontalen einen Winkel zwischen 0° und 10°, insbesondere zwischen 0° und 5°, einschließen.

Das Führungselement kann insbesondere radial außerhalb der Kreisbahn verlaufen. Mit anderen Worten kann das Führungselement die Kreisbahn wenigstens teilweise radial umgeben oder begrenzen. Das Führungselement kann insbesondere annähernd tangential entlang bestimmten Abschnitten der Kreisbahn verlaufen, insbesondere im Abschnitt der Kreisbahn zwischen dem Aufnahmebereich und dem Abgabebereich.

Die Kreisbahn kann insbesondere durch ein äußerstes Ende oder eine Spitze des Zentrierschiebers überstrichen werden. Mit anderen Worten kann die Kreisbahn einen Radius aufweisen, der der Länge des Zentrierschiebers entspricht. Die Länge des Zentrierschiebers kann der maximalen radialen Erstreckung des Zentrierschiebers ausgehend von der Drehachse entsprechen.

Der Aufnahmebereich kann ein bestimmtes Kreissegment der Kreisbahn des Zentrierschiebers umfassen.

Im Abgabebereich kann die Stützwirkung des Führungselementes entfallen oder der Verlauf des Führungselementes sich derart ändern, dass das wenigstens eine Korn durch Fliehkraft in die Auslassöffnung gefördert wird.

Als Führungsfläche des Führungselements wird hierin die für die Förderung des granularen Materials vom Aufnahmebereich in den Abgabebereich wirksame Fläche des Führungselements bezeichnet. Mit anderen Worten entspricht die Führungsfläche des Führungselements der Oberfläche des Führungselements, auf der Körner des granularen Materials bei der Förderung von dem Aufnahmebereich in den Abgabebereich hin bewegt werden. Aufgrund der Bewegung entlang der Kreisbahn wird das granulare Material durch Fliehkraft gegen die Führungsfläche des Führungselements gedrückt. Die Führungsfläche des Führungselements dient daher als Stütze für das granulare Material entgegen der Fliehkraft. Alternativ oder zusätzlich können die Körner auch durch die Schwerkraft gegen die Führungsfläche gedrückt werden. Dies kann insbesondere dann der Fall sein, wenn sich der Zentrierschieber gemäß einer Alternative nicht entlang einer Kreisbahn um die Drehachse bewegt, sondern entlang einer Bahn, die wenigstens teilweise parallel zur Horizontalen verläuft.

Wenn die Breite der Führungsfläche abnimmt geht diese Stützwirkung, wie oben erwähnt, für bestimmte Körner des granularen Materials verloren, weshalb diese nicht weiter zum Abgabebereich hin gefördert werden können, sondern ausgesondert werden.

Die Breite der Führungsfläche kann vom Aufnahmebereich zum Abgabebereich hin kontinuierlich abnehmen. Dadurch können überschüssige Körner sukzessive ausgesondert werden. Diese werden dann sukzessive an den Aufnahmebereich zurückgeführt, sodass ein ausreichendes Reservoir von granularem Material im Aufnahmebereich bereitgestellt werden kann, selbst wenn über die Zufuhrleitung temporär zu wenig granulares Material zugeführt wird. Die Breite der Führungsfläche kann jedoch auch diskontinuierlich abnehmen.

Als Breite der Führungsfläche kann insbesondere die Ausdehnung der Führungsfläche quer zur Kreisbahn bezeichnet werden. Die Richtung quer zur Kreisbahn bezeichnet hierin eine Richtung, die an jedem Punkt der Kreisbahn senkrecht zur Tangente und senkrecht zum Radius der Kreisbahn verläuft. Die Ausdehnung der Führungsfläche in dieser Richtung wird entlang der, gegebenenfalls konturierten, Führungsfläche bestimmt.

Das Führungselement kann eine Vertiefung aufweisen, in die der Zentrierschieber wenigstens teilweise eingreift, wobei die Tiefe der Vertiefung entlang der Kreisbahn des Vereinzelungsschiebers vom Aufnahmebereich zum Abgabebereich hin abnimmt. Durch die Vertiefung im Aufnahmebereich ist es möglich, dass zuverlässig Saatgut durch den Zentrierschieber aufgenommen und entlang der Führungsfläche bewegt werden kann. Durch die abnehmende Tiefe der Vertiefung entlang der Kreisbahn kann wiederum eine Aussonderung überschüssiger Körner des granularen Materials bewirkt werden. Die Abnahme der Tiefe geht mit einer Abnahme der Breite der Führungsfläche einher.

Die Vertiefung im Führungselement kann insbesondere einer Nut oder Kerbe entsprechen. Die Nut oder Kerbe kann insbesondere V-förmig ausgebildet sein.

Das Führungselement kann im Abgabebereich einen in Drehrichtung verlaufenden Grat aufweisen. Durch einen solchen Grat wird eine Vereinzelung des granularen Materials weiter gefördert, da entlang des Grats üblicherweise nur ein Korn stabil bewegt werden kann, nämlich das Korn, welches wenigstens teilweise durch den Zentrierschieber zentriert wird. Die vorherbestimmte Bahn entlang der Führungsfläche, entlang der der Zentrierschieber ein Korn zentriert bewegt, kann insbesondere entlang des Grats verlaufen.

Beidseitig des Führungselements kann ein Sammelraum für im Laufe des Transports vom Aufnahmebereich zum Abgabebereich ausgesonderte Körner des granularen Materials angeordnet sein, der mit dem Aufnahmebereich verbunden ist. Dadurch können ausgesonderte Körner wieder für den erneuten Transport vom Aufnahmebereich in den Abgabebereich bereitgestellt werden. Der Sammelraum kann durch die Wandung des Gehäuses begrenzt werden.

Das Führungselement kann an einer Innenfläche des Gehäuses angeordnet sein, welche den Raum, in dem der Zentrierschieber im Betrieb rotiert, radial begrenzt. Mit anderen Worten kann das Gehäuse im Wesentlichen zylindrisch ausgebildet sein, wobei das Führungselement an der Mantelfläche des Gehäuses angeordnet ist.

Das Führungselement kann Teil der Innenfläche des Gehäuses sein. Alternativ kann das Führungselement zerstörungsfrei lösbar oder nicht zerstörungsfrei lösbar mit der Innenfläche des Gehäuses verbunden sein. Beispielsweise kann das Führungselement an das Gehäuse angeschweißt sein.

Das Führungselement und der Zentrierschieber können in einer gemeinsamen Ebene angeordnet sein, wobei das Führungselement und der Zentrierschieber bezüglich dieser Ebene symmetrisch ausgebildet sind. Die gemeinsame Ebene kann insbesondere eine Rotationsebene des Zentrierschiebers sein.

Falls das Führungselement eine Vertiefung aufweist, können die Punkte mit der größten Tiefe in der gemeinsamen Ebene liegen.

Falls das Führungselement einen Grat aufweist, kann dieser ebenfalls in der gemeinsamen Ebene liegen.

Die Dosiervorrichtung kann wenigstens einen weiteren Zentrierschieber umfassen. Dieser kann eines oder mehrere Merkmale des oben genannten Zentrierschiebers aufweisen. Insbesondere kann der wenigstens eine weitere Zentrierschieber so drehbar im Gehäuse gelagert sein, dass er entlang der Kreisbahn bewegbar ist. Mit anderen Worten kann der weitere Zentrierschieber in Umfangsrichtung versetzt zum oben beschriebenen Zentrierschieber angeordnet sein und dem oben beschriebenen Zentrierschieber nachlaufend entlang der Kreisbahn bewegbar sein.

Der Zentrierschieber und der wenigstens eine weitere Zentrierschieber können miteinander verbunden sein, insbesondere starr miteinander verbunden sein.

Der Zentrierschieber und der wenigstens eine weitere Zentrierschieber können an einer gemeinsamen rotierenden Scheibe oder einem gemeinsam rotierenden Ring angeordnet sein.

Der Zentrierschieber und der wenigstens eine weitere Zentrierschieber können ein die Zentrierwirkung des Zentrierschiebers erzeugendes Element aufweisen. Dieses Element kann insbesondere so ausgebildet sein, dass ein Korn des granularen Materials beidseitig stützbar oder führbar ist. Das Element kann nach vorne hin (in Drehrichtung) offen sein. Mit anderen Worten kann eine Abstützung des Korns nach vorne hin unterbleiben.

Der Zentrierschieber kann insbesondere eine in Drehrichtung offene Nut oder Kerbe zur Aufnahme eines Korn des granularen Materials umfassen. Die Nut oder Kerbe kann auch in Richtung der Führungsfläche offen sein. Die Größe der Nut kann so gewählt sein, dass sich maximal ein Korn ganz oder teilweise in der Nut anordnen kann.

Die Nut kann insbesondere konisch oder V-förmig ausgebildet sein. Die Nut kann insbesondere bezüglich der oben genannten gemeinsamen Ebene des Führungselements und des Zentrierschiebers symmetrisch ausgebildet sein. Eine korrespondierende Vertiefung im Führungselement kann ebenfalls symmetrisch bezüglich dieser Ebene ausgebildet sein. Diese Symmetrie erlaubt insbesondere ein beidseitiges Absondern von überschüssigen Körnern in den umgebenden Sammelraum.

In einer alternativen Ausführungsform kann der Zentrierschieber mehrere in Richtung des Führungselements weisende Borsten aufweisen. Wenn die Breite der Führungsfläche zum Abgabebereich hin abnimmt, werden äußere Borsten nicht mehr entlang der Führungsfläche bewegt und können sich infolge der Fliehkraftwirkung aufstellen. Damit können diese Borsten ein Korn des granularen Materials seitlich führen. Nachlaufende Borsten können das Korn in Drehrichtung gesehen nach hinten abstützen. Mit anderen Worten kann sich auch bei einem Borsten umfassenden Zentrierschieber eine konische oder V-förmige Zentrierfläche für ein Korn ausbilden.

Das die Zentrierwirkung des Zentrierschiebers erzeugende Element des Zentrierschiebers kann insbesondere am äußersten Ende oder an der Spitze des Zentrierschiebers angeordnet sein.

Das Zentrierelement kann austauschbar sein. Beispielsweise kann eine die oben genannte Nut des Zentrierschiebers umfassende Spitze des Zentrierschiebers auswechselbar sein. Dadurch kann eine gewisse Anpassung oder Optimierung hinsichtlich der Korngrößen erzielt werden.

Die Dosiervorrichtung kann wenigstens ein Störelement umfassen, welches so ausgebildet ist, dass Körner des granularen Materials, die nicht durch den Zentrierschieber zentriert werden unter Einfluss des Störelements ihre Lage ändern oder vom Transport zum Abgabebereich hin ausgesondert werden. Ein derartiges Störelement begünstigt die Aussonderung überschüssiger Körner und somit die Vereinzelung des granularen Materials.

Das Störelement kann beispielsweise eine Druckluftdüse umfassen.

Es kann also wenigstens eine Druckluftdüse vorgesehen und so angeordnet sein, dass Druckluft auf granulares Material gerichtet werden kann, welches durch den Zentrierschieber entlang der Führungsfläche des Führungselements geschoben wird. Diese Druckluft kann eine Störung für Körner des granularen Materials darstellen, welche nicht durch den Zentrierschieber zentriert geführt werden. Dadurch kann die Aussonderung von überschüssigen Körnern unterstützt werden. Dies kann auch eine zuverlässigere Vereinzelung des granularen Materials ermöglichen.

Die Druckluftdüse kann in das Führungselement integriert sein, und insbesondere eine Luftausströmöffnung umfassen, die in der Führungsfläche angeordnet ist. Dadurch ist eine besonders effiziente Störung überschüssiger Körner möglich.

Alternativ oder zusätzlich ist es auch denkbar, eine mit Druckluft beaufschlagbare Scheibe vorzusehen, die gemeinsam mit dem Zentrierschieber rotiert und wenigstens eine Öffnung aufweist, die im Bereich des Zentrierschiebers angeordnet ist. Diese mitlaufende Öffnung kann in Drehrichtung gesehen insbesondere stromabwärts des Zentrierschiebers angeordnet sein, also vorlaufen.

Durch die Druckluftdüse kann Druckluft in radialer und/oder axialer Richtung ausgegeben werden.

Das Störelement kann alternativ oder zusätzlich ein geometrisches Störelement sein. Mit anderen Worten kann das wenigstens eine Störelement einer lokalen Änderung der Geometrie der Führungsfläche des Führungselements entsprechen. Insbesondere kann das wenigstens eine Störelement eine veränderte Neigung der Führungsfläche umfassen. Im Bereich des Störelements kann sich die Geometrie der Führungsfläche insbesondere diskontinuierlich ändern.

Der oder die oben beschriebenen Zentrierschieber können in Drehrichtung eine Ausdehnung oder Länge aufweisen, die wenigstens dem Durchmesser der Auslassöffnung in Drehrichtung entspricht und kleiner ist, als der Abstand zwischen zwei aufeinanderfolgenden Zentrierschiebern, oder, bei nur einem Zentrierschieber, kleiner ist, als der Umfang der Kreisbahn entlang der sich der Zentrierschieber bewegt. Dadurch kann erreicht werden, dass der Zentrierschieber die Auslassöffnung möglichst lange wenigstens teilweise blockiert. Dies ist vorteilhaft, um ungewünschte Luftströmungen zwischen einer Zuführöffnung und der Auslassöffnung zu verringern. Die Länge kann insbesondere kleiner oder gleich 90% des Abstands zwischen zwei aufeinanderfolgenden Zentrierschiebern bzw. kleiner oder gleich 90% des Umfangs der Kreisbahn sein.

Der oder die oben beschriebenen Zentrierschieber können auch quer zur Drehrichtung eine Ausdehnung oder Breite aufweisen, die wenigstens dem Durchmesser der Auslassöffnung quer zur Drehrichtung entspricht. Dadurch ist eine noch bessere Abdeckung der Auslassöffnung möglich.

Alternativ zur beschriebenen Ausbildungsform unter Verwendung von Zentrierschiebern kann die Dosiervorrichtung auch wie in der DE 10 2012 105 048 A1 beschrieben ausgebildet sein. An die drehbar gelagerte Fördereinrichtung kann also annähernd tangential eine Innenmantelfläche des Gehäuses anschließen. Die Fördereinrichtung kann mit Taschen zusammenwirken, in denen Körner des granularen Materials gedrängt und kreisförmig befördert werden, bis in einem vorherbestimmten Gehäusebereich durch eine veränderte Kontur der Innenmantelfläche des Gehäuses und unter Zentrifugalkrafteinflüssen nur jeweils ein einzelnes Korn in der Tasche verbleibt, während überschüssige Körner abgesondert und zur erneuten Förderung in einen ersten Gehäusebereich zurückgeführt werden.
Die Erfindung stellt außerdem ein Nachfüllsystem für granulares Material gemäß Patentanspruch 9 bereit, umfassend einen zentralen Vorratsbehälter zum Vorhalten des granularen Materials, eine oben beschriebene Dosiervorrichtung, und einem pneumatischen Förderkanal zum pneumatischen Fördern von granularem Material vom Vorratsbehälter zur Dosiervorrichtung. Ein derartiges Nachfüllsystem kann auch als Nursingsystem bezeichnet werden.
Das Nachfüllsystem kann insbesondere ein Gebläse umfassen, um den pneumatischen Förderkanal mit Förderluft zu beaufschlagen. Der pneumatische Förderkanal kann den zentralen Vorratsbehälter direkt oder unmittelbar mit der Dosiervorrichtung, insbesondere dem Sammelbehälter der Dosiervorrichtung, verbinden. Auf einen Verteilerkopf kann damit verzichtet werden.
Die Erfindung stellt außerdem eine Sämaschine umfassend eine oben beschriebene Dosiervorrichtung oder ein oben beschriebenes Nachfüllsystem bereit. Bei der Sämaschine kann es sich insbesondere um eine Einzelkornsämaschine handeln. Die Dosiervorrichtung oder das Nachfüllsystem können eines oder mehrere der oben genannten Merkmale aufweisen.
Weitere Merkmale und Vorteile der Erfindung werden nachfolgend anhand der beispielhaften Figuren erläutert. Dabei zeigt:
- Figur 1: eine perspektivische Ansicht einer beispielhaften Dosiervorrichtung;
- Figur 2: einen Querschnitt durch Teile einer beispielhaften Dosiervorrichtung;
- Figur 3: einen Querschnitt durch eine weitere beispielhafte Dosiervorrichtung; und
- Figur 4: einen weiteren Querschnitt durch eine beispielhafte Dosiervorrichtung.

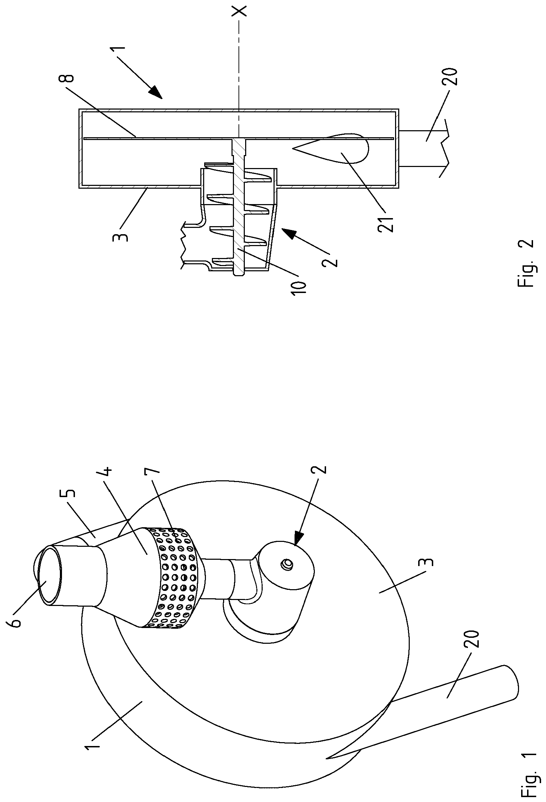

Figur 1 zeigt eine perspektivische Außenansicht einer beispielhaften Dosiervorrichtung für granulares Material. Die Dosiervorrichtung umfasst ein Gehäuse 1, innerhalb der eine hier nicht sichtbare Fördereinrichtung drehbar gelagert ist. Die Fördereinrichtung wirkt mit einer Gehäusewandung oder einem Führungselement so zusammen, dass granulares Material von einem Aufnahmebereich in einen Abgabebereich förderbar ist. Im Abgabebereich ist eine Auslassöffnung vorgesehen, über die das granulare Material aus dem Gehäuse 1 ausgeschleust werden kann. Das so ausgeschleuste granulare Material kann beispielsweise über eine in Figur 1 angedeutete Verbindungsleitung 20 an eine Abgabevorrichtung geleitet werden. Die Abgabevorrichtung kann beispielsweise ein Säschar umfassen.

Ebenfalls in Figur 1 dargestellt ist eine Vordosiereinheit 2, die über eine Seitenwand 3 des Gehäuses 1 in das Gehäuse 1 mündet.

Die Vordosiereinheit 2 umfasst einen drehbar gelagerten Rotor, der hier im Inneren der Vordosiereinheit 2 angeordnet und daher nicht sichtbar ist. Die Drehachse des Rotors der Vordosiereinheit 2 verläuft in diesem Beispiel koaxial zur Drehachse der Fördereinrichtung im Gehäuse 1.

Durch diese Maßnahme kann granulares Material, in diesem Beispiel insbesondere Saatgut, von der Mitte aus auf die Fördereinrichtung abgegeben werden. Dadurch ist eine schonendere Behandlung des Saatguts möglich.

Es wäre auch möglich, dass die Drehachse des Rotors der Vordosiereinheit 2 mit der Drehachse der Fördereinrichtung einen Winkel einschließt, der größer als 0° und kleiner als 10°, insbesondere kleiner als 5°, ist.

Die Drehachse der Fördereinrichtung kann horizontal verlaufen, insbesondere im Betrieb parallel zum zu bearbeitenden Boden. Insbesondere kann die Drehachse mit der Horizontalen einen Winkel zwischen 0° und 10°, insbesondere zwischen 0° und 5°, einschließen.

Die in Figur 1 gezeigte Vordosiereinheit 2 umfasst auch einen Sammelbehälter 4 für granulares Material. In den Sammelbehälter 4 mündet eine hier nur teilweise dargestellte Rückleitung 5, welche den Sammelbehälter 4 und das Innere des Gehäuses 1 verbindet, sodass Körner des granularen Materials vom Gehäuse 1 in den Sammelbehälter 4 über die Rückleitung 5 förderbar sind.

Über eine Öffnung 6 kann granulares Material von einem hier nicht gezeigten Nachfüllsystem in den Sammelbehälter 4 eingebracht werden. Dieses granulare Material kann zusammen mit dem über die Rückleitungen 5 zurückgeführten granularen Material einen Saatgutvorrat innerhalb des Sammelbehälters 4 bilden. Über den Rotor und damit verbundene Förderelemente kann dann granulares Material aus dem Sammelbehälter 4 über die Seitenwand 3 des Gehäuses 1 in das Innere des Gehäuses 1 verbracht werden, so dass es dort für die Fördereinrichtung bereitgestellt wird.

In einer Seitenwand des Sammelbehälters 4 ist ein Abschnitt 7 mit einer Vielzahl von Durchlassöffnungen vorgesehen. Durch diese Durchlassöffnungen oder Bohrungen im Abschnitt 7 ist es möglich, ein sogenanntes Nursingsystem zum Beschicken des Sammelbehälters 4 mit granularem Material zu verwenden. Dafür kann der Sammelbehälter 4 mit einem zentralen Vorratsbehälter über einen pneumatischen Förderkanal verbunden sein. Der Förderkanal kann über ein Gebläse mit einem Überdruck gegenüber dem Atmosphärendruck beaufschlagt werden. Solange eine Luftströmung über den pneumatischen Förderkanal und die Durchlassöffnungen in Abschnitt 7 stattfindet, findet auch eine Förderung von Saatgut aus dem zentralen Vorratsbehälter in den Sammelbehälter 4 statt. Sobald jedoch die in den Sammelbehälter 4 eingebrachten Körner des granularen Materials die Öffnungen im Abschnitt 7 blockieren, bricht der Förderluftstrom im pneumatischen Förderkanal ab, so dass auch die weitere Zuführung von granularem Material aus dem zentralen Vorratsbehälter über die Öffnung 6 in den Sammelbehälter 4 stoppt. Ein solches Nursingsystem ermöglicht also eine selbstregulierende Zuführung von granularem Material zur Vordosiereinheit 2.

Ein weiterer Vorteil eines Nursingsystems ist der einfachere Aufbau gegenüber der Verwendung eines Zentraldosierers mit nachgeschaltetem Verteilerkopf.

In Figur 2 ist ein Schnitt durch Teile der beispielhaften Dosiervorrichtung gemäß Figur 1 dargestellt. Insbesondere ist in Figur 2 das Gehäuse 1 dargestellt, in dessen Inneren die drehbar gelagerte Fördereinrichtung 8 schematisch dargestellt ist. Außerdem zu sehen ist die Auslassöffnung 21, welche im Gehäuse 1 angeordnet ist und eine Verbindung zwischen dem Inneren des Gehäuses 1 und dem Inneren des Verbindungskanals 20 bildet. Über diese Auslassöffnung 21 kann granulares Material aus dem Gehäuse 1 ausgeschleust werden, insbesondere nachdem es von der Fördereinrichtung 8 aus einem Aufnahmebereich in den Abgabebereich gefördert und damit dosiert wurde. Die Fördereinrichtung 8 kann insbesondere als Vereinzelungsvorrichtung dienen, so dass in regelmäßigen Abständen einzelne Körner des granularen Materials über die Auslassöffnung 21 in den Verbindungskanal 20 eingebracht werden.

Die Drehachse der Fördereinrichtung 8 verläuft in diesem Beispiel horizontal und ist mit der Bezeichnung "X" gekennzeichnet. Im Betrieb der Dosiervorrichtung verläuft die Drehachse X parallel zum zu bearbeiteten landwirtschaftlichen Boden.

Ebenfalls in Figur 2 ersichtlich sind Teile der Vordosiereinheit 2, die über die Seitenwand 3 in das Gehäuse 1 mündet. Dargestellt ist ein als Schneckenförderer ausgebildeter Rotor 10, welcher geeignet ist, granulares Material aus dem in Figur 2 nicht mehr dargestellten Sammelbehälter 4 in das Innere des Gehäuses 1 zu fördern.

Die Drehachse des Rotors 10 verläuft in diesem Beispiel koaxial zur Drehachse X der Fördereinrichtung 8.

Der Antrieb der Förderschnecke kann in diesem Fall unmittelbar oder direkt von der Motorwelle erfolgen, welche auch die Fördereinrichtung 8 antreibt. Es wird in diesem Beispiel kein Getriebe benötigt, um den Rotor 10 anzutreiben. Mit anderen Worten entspricht die Schneckenwelle im Beispiel der Figur 2 der Antriebswelle der Fördereinrichtung 8.

Alternativ zur Ausbildung des Rotors 10 als Schneckengewinde oder Schneckenförderer könnte der Rotor auch ein Innengewinde, welches im Inneren der Vordosiereinheit 2 angeordnet ist, antreiben.

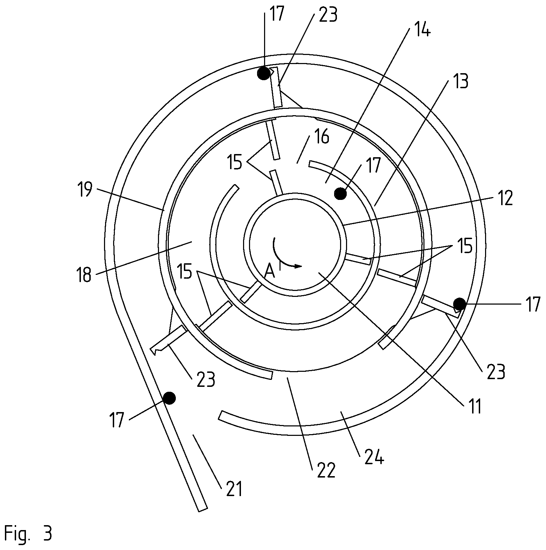

Figur 3 zeigt einen Querschnitt durch eine beispielhafte Dosiervorrichtung gemäß einem Ausführungsbeispiel der vorliegenden Erfindung, bei der die Vordosiereinheit eine Schleuse umfasst. Die Schleuse umfasst eine Zuführkammer 11 mit einer Außenwandung 12. Die Zuführkammer 11 ist in diesem Beispiel zylindrisch ausgebildet, insbesondere kreiszylindrisch. Die Zuführkammer 11 mündet wie oben dargestellt über eine Seitenwand des Gehäuses 1 in das Gehäuse 1 der Dosiervorrichtung. Die Zuführkammer 11 kann wie oben dargestellt mit einem Sammelbehälter 4 verbunden sein, insbesondere über einen Schneckenförderer, wie in Figur 2 dargestellt oder über ein Innengewinde.

Bevorzugt kann die Außenwand 12 Zuführkammer 11 um die Drehachse X drehbar sein, und zwar in einer Drehrichtung, welche durch den Pfeil A in Figur 3 angedeutet wird.

Über die Zuführkammer 11 und eine entsprechende Zuführöffnung in der Wandung des Gehäuses 1 kann granulares Material in eine durch eine erste Wandung 13 begrenzte Innenkammer 14 eingebracht werden.

In dieser Innenkammer sind in diesem Beispiel drei Mitnehmer 15 angeordnet, die sich um die Drehachse X in Richtung des Pfeils A innerhalb der Innenkammer 14 im Betrieb der Dosiervorrichtung drehen. Die erste Wandung 13 umfasst eine Öffnung 16. Abgesehen von dieser Öffnung 16 ist die erste Wandung hinsichtlich der Drehachse X rotationssymmetrisch ausgebildet.

Ein in der Innenkammer 14 angeordnetes Korn 17 des granularen Materials wird über die Mitnehmer 15 in Rotation um die Drehachse X versetzt, so dass es die Innenkammer 14 im Bereich der Öffnung 16 verlassen kann. Dies geschieht insbesondere aufgrund von Fliehkraft, die auf das Korn 17 aufgrund der Bewegung um die Drehachse X wirkt.

Die Innenkammer 14 wird von einer Außenkammer 18 umgeben, die durch eine zweite Wandung 19 begrenzt wird. Auch die zweite Wandung 19 ist bezüglich der Drehachse X rotationssymmetrisch ausgebildet. Auch innerhalb der Außenkammer 18 bewegen sich im Betrieb der Dosiervorrichtung drei in gleichmäßigen Winkelabständen angeordnete Mitnehmer 15.

Die zweite Wandung 19 umfasst eine Öffnung 22. Wie aus der Figur 3 ersichtlich, sind die erste Öffnung 16 und die zweite Öffnung 22 so versetzt zueinander angeordnet, dass sie sich von der Drehachse X aus gesehen in radialer Richtung nicht überlappen. Dadurch kann ein Luftstrom zwischen der im Bereich der Zuführkammer 11 angeordneten Zuführöffnung und der in Figur 3 ebenfalls dargestellten Auslassöffnung 21 des Gehäuses vermieden werden. Solch ein Luftstrom könnte sich nämlich negativ auf die Zuführung von granularem Material in dem oben beschriebenen Sammelbehälter über ein Nursingsystem auswirken.

Durch die Mitnehmer 15 in der Außenkammer 18 wird die erste Öffnung 16 zusätzlich gegenüber der zweiten Öffnung 22 abgeschirmt oder abgeschottet. Dadurch kann eine weitere Verringerung eines direkten Luftstroms von der Zuführöffnung zur Auslassöffnung 21 erzielt werden.

Im Übrigen zeigt Figur 3 noch innerhalb des Gehäuses 1 angeordnete Zentrierschieber 23 einer drehbar gelagerten Fördereinrichtung. Über die zweite Öffnung 22 gelangen Körner des granularen Materials aus der Außenkammer 18 heraus in den Aufnahmebereich 24. Dies geschieht wiederum unter Fliehkrafteinfluss.

Im Aufnahmebereich 24 werden die Körner 17 dann durch die Zentrierschieber 23 aufgenommen und in den Abgabebereich gefördert, wo sie dann erneut unter Fliehkraftwirkung über die Auslassöffnung 21 aus dem Gehäuse 1 ausgebracht werden können.

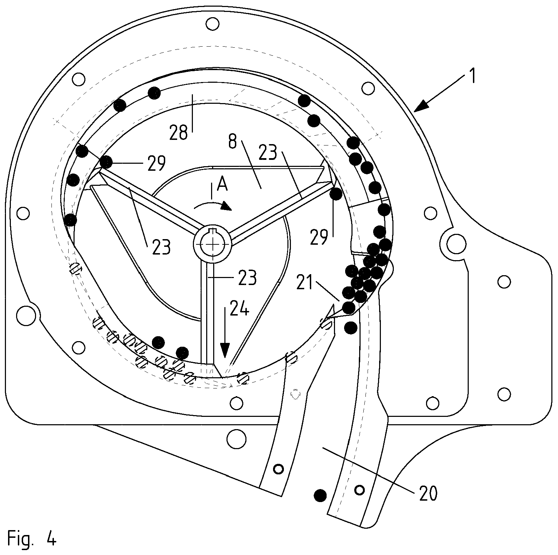

Figur 4 zeigt weitere Details einer möglichen Dosiervorrichtung, insbesondere in Bezug auf die verwendete Fördereinrichtung.

Die Dosiervorrichtung umfasst ein Gehäuse 1, in dem in diesem Beispiel eine drehbar gelagerte Fördereinrichtung 8 angeordnet ist. Die Fördereinrichtung 8 dreht im Betrieb um eine Querachse X, die in diesem Beispiel senkrecht zur Bildebene verläuft. Die Drehrichtung der Fördereinrichtung 8 im Betrieb ist durch einen Pfeil A angedeutet.

Ein nicht dargestellter Motor oder Antrieb ist vorgesehen, um die Fördereinrichtung 8 anzutreiben. Eine Antriebswelle des Motors oder Antriebs kann entlang der Drehachse X verlaufen. Der Motor oder Antrieb kann hinsichtlich seiner Drehzahl regelbar oder steuerbar sein.

Die Dosiervorrichtung kann so ausgebildet sein, dass die Fördereinrichtung 8 mit einer Frequenz zwischen 5 Hz und 60 Hz rotiert. Durch eine Ausbildung der Fördereinrichtung mit beispielsweise drei Mitnehmern 23, wird so eine Vereinzelungsfrequenz von 15 Hz bis 180 Hz ermöglicht. Dadurch können sehr geringe Abstände zwischen den abgelegten Körnern erzielt werden.

Die Fördereinrichtung 8 umfasst in diesem Beispiel drei Mitnehmer 23, welche sich entlang einer Kreisbahn bewegen, deren Radius der Länge der Mitnehmer 23 entspricht.

Entlang der Kreisbahn ist in diesem Beispiel wenigstens teilweise ein Führungselement 28 angeordnet, das die Mitnehmer 23 bei ihrer Drehbewegung teilweise überstreichen. Die Mitnehmer 23 und das Führungselement 28 wirken so zusammen, dass im Betrieb der Dosiervorrichtung granulares Material durch die Mitnehmer 23 entlang einer Führungsfläche des Führungselements 28 von dem Aufnahmebereich 24 in den Abgabebereich geschoben wird.

Im Abgabebereich ist eine Auslassöffnung 21 vorgesehen, über die das granulare Material aus dem Gehäuse 1 ausgeschleust werden kann. Das so ausgeschleusten granulare Material kann beispielsweise an eine Abgabevorrichtung geleitet werden, welche das granulare Material auf einer landwirtschaftlichen Fläche ablegt. Die Abgabevorrichtung kann beispielsweise ein Säschar umfassen. Der Kanal 20, welcher die Abgabevorrichtung mit der Dosiervorrichtung verbindet, ist in Figur 4 angedeutet.

Die hier gezeigten Mitnehmer 23 agieren als Zentrierschieber, welche das granulare Material entlang einer Führungsfläche des Führungselements 28 vor sich herschieben und im Wesentlichen nur ein einzelnes Korn 29 seitlich abstützen und damit zentrieren. Die Breite der Führungsfläche des Führungselements 28 nimmt in diesem Beispiel vom Aufnahmebereich 24 zum Abgabebereich hin wenigstens abschnittsweise ab. Dadurch werden kontinuierlich Körner des granularen Materials, die anfänglich durch die Zentrierschieber entlang der Führungsfläche geschoben wurden, ausgesondert. Nur das jeweils durch die Zentrierschieber zentrierte Korn 29 verbleibt auf der Führungsbahn entlang der Führungsfläche und wird im Abgabebereich über die Auslassöffnung 21 aus dem Gehäuse 1 ausgebracht.

Die ausgesonderten Körner gelangen in einen Sammelraum, welcher das Führungselement 28 umgibt. Aufgrund ihrer Trägheit bewegen sich die ausgesonderten Körner weiter entlang einer Kreisbahn im Sammelraum. Der Sammelraum umfasst eine Begrenzungswandung, welche den Raum, in dem der Mitnehmer im Betrieb rotiert, radial begrenzt. Die Begrenzungswandung umfasst wenigstens teilweise die Innenmantelfläche des Gehäuses 1.

Die ausgesonderten Körner können dann in den Aufnahmebereich 24 gelangen, wo sie erneut für die Mitnehmer 23 zur Förderung bereitstehen. Alternativ, wenn ein Nursingsystem, wie in Zusammenhang mit Figur 1 beschrieben, verwendet wird, können die ausgesonderten Körner auch über eine Rückleitung 5 in einen Sammelbehälter 4 zurückgefördert werden.

Die in Figur 4 beschriebene Dosiervorrichtung kann insbesondere mit einer oben beschriebenen Vordosiereinheit kombiniert werden.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind. Insbesondere kann auch ein Verteilerkopf in Verbindung mit einem Zentraldosierer verwendet werden, um die Dosiervorrichtung mit granularem Material zu speisen. Es stellt diese Art der Zuführung des granularen Materials eine Alternative zum Nursingsystem dar. Die Verwendung der Dosiervorrichtung mit jeder der beiden Alternativen ist im Rahmen der Erfindung möglich.

## Patentansprüche

1. Dosiervorrichtung für granulares Material, insbesondere Saatgut, wobei die Dosiervorrichtung eine in einem Gehäuse (1) drehbar gelagerte Fördereinrichtung (8) umfasst, die mit einer Gehäusewandung oder einem Führungselement (28) so zusammenwirkt, dass granulares Material von einem Aufnahmebereich (24) in einen Abgabebereich förderbar ist,
wobei die Dosiervorrichtung eine Vordosiereinheit (2) umfasst, die über eine Seitenwand (3) des Gehäuses (1) in das Gehäuse (1) mündet;
wobei mit der Vordosiereinheit (2) granulares Material in das Gehäuse (1) eingebracht werden kann; und
wobei die Vordosiereinheit (2) einen Rotor (10) umfasst, dessen Drehachse mit der Drehachse der Fördereinrichtung (8) einen Winkel kleiner als 10° einschließt,
**dadurch gekennzeichnet, dass**
die Vordosiereinheit eine Schleuse für das granulare Material umfasst, die durch den Rotor (10) antreibbar ist.

2. Dosiervorrichtung nach Anspruch 1, wobei der Rotor (10) der Vordosiereinheit (2) und die Fördereinrichtung (8) durch einen gemeinsamen Antrieb antreibbar sind.

3. Dosiervorrichtung nach Anspruch 2, wobei der Rotor (10) der Vordosiereinheit (2) unmittelbar durch den gemeinsamen Antrieb antreibbar ist.

4. Dosiervorrichtung nach einem der vorangegangenen Ansprüche, wobei die Vordosiereinheit (2) ein Schneckengewinde umfasst, das durch den Rotor (10) antreibbar ist.

5. Dosiervorrichtung nach einem der Ansprüche 1 bis 3, wobei die Vordosiereinheit (2) ein Innengewinde umfasst, das durch den Rotor (10) antreibbar ist.

6. Dosiervorrichtung nach einem der vorangegangenen Ansprüche, wobei die Vordosiereinheit (2) so ausgebildet ist, dass granulares Material wahlweise direkt, unter Umgehung der Fördereinrichtung (8), an eine an die Dosiervorrichtung anschließende Abgabevorrichtung geleitet werden kann.

7. Dosiervorrichtung nach einem der vorangegangenen Ansprüche, wobei die Vordosiereinheit (2) einen Sammelbehälter (4) für granulares Material umfasst.

8. Dosiervorrichtung nach Anspruch 7, wobei der Sammelbehälter (4) außerdem über eine Rückleitung (5) mit dem Gehäuse (1) verbunden ist, über die Körner des granularen Materials vom Gehäuse (1) in den Sammelbehälter (4) gefördert werden können.

9. Nachfüllsystem für granulares Material umfassend:
einen zentralen Vorratsbehälter zum Vorhalten des granularen Materials;
eine Dosiervorrichtung nach einem der vorangegangenen Ansprüche; und
einen pneumatischen Förderkanal zum pneumatischen Fördern von granularem Material vom Vorratsbehälter zur Dosiervorrichtung.

10. Sämaschine umfassend eine Dosiervorrichtung nach einem der Ansprüche 1 - 8.

11. Sämaschine umfassend ein Nachfüllsystem nach Anspruch 9.

## Claims

1. Metering apparatus for granular material, in particular seed material, wherein the metering apparatus comprises a conveying device (8), which is mounted in a rotatable manner in a housing (1) and interacts with a housing wall or a guide element (28) such that granular material can be conveyed from a receiving region (24) into a dispensing region,
wherein the metering apparatus comprises a pre-metering unit (2), which opens out into the housing (1) via a side wall (3) of the housing (1) ;
wherein the pre-metering unit (2) can introduce granular material into the housing (1); and wherein the pre-metering unit (2) comprises a rotor (10), of which the axis of rotation encloses an angle of smaller than 10° with the axis of rotation of the conveying device (8),
**characterized in that**
the pre-metering unit comprises an airlock for the granular material, it being possible for the airlock to be driven by the rotor (10).

2. Metering apparatus according to Claim 1, wherein the rotor (10) of the pre-metering unit (2) and the conveying device (8) can be driven by a common drive.

3. Metering apparatus according to Claim 2, wherein the rotor (10) of the pre-metering unit (2) can be driven directly by the common drive.

4. Metering apparatus according to one of the preceding claims, wherein the pre-metering unit (2) comprises a worm thread which can be driven by the rotor (10).

5. Metering apparatus according to one of Claims 1 to 3, wherein the pre-metering unit (2) comprises an internal thread which can be driven by the rotor (10) .

6. Metering apparatus according to one of the preceding claims, wherein the pre-metering unit (2) is designed such that granular material can be channelled optionally directly, with the conveying device (8) being bypassed, to a dispensing apparatus, which adjoins the metering apparatus.

7. Metering apparatus according to one of the preceding claims, wherein the pre-metering unit (2) comprises a collecting hopper (4) for granular material.

8. Metering apparatus according to Claim 7, wherein the collecting hopper (4) is connected to the housing (1), moreover, via a return line (5), via which granules of the granular material can be conveyed from the housing (1) into the collecting hopper (4).

9. Refilling system for granular material, comprising:
a central storage hopper for storing the granular material;
a metering apparatus according to one of the preceding claims; and
a pneumatic conveying channel for pneumatically conveying granular material from the storage hopper to the metering apparatus.

10. Seed drill comprising a metering apparatus according to one of Claims 1-8.

11. Seed drill comprising a refilling system according to Claim 9.

## Revendications

1. Dispositif de dosage pour matériau granulaire, en particulier des semences, dans lequel le dispositif de dosage comprend un dispositif de transport (8) monté de façon rotative dans un boîtier (1), qui coopère avec une paroi de boîtier ou un élément de guidage (28), de telle manière du matériau granulaire puisse être transporté d'une zone de chargement (24) à une zone de déchargement,
dans lequel le dispositif de dosage comprend une unité de prédosage (2), qui débouche dans le boîtier (1) par une paroi latérale (3) du boîtier (1);
dans lequel du matériau granulaire peut être introduit dans le boîtier (1) au moyen de l'unité de prédosage (2); et dans lequel l'unité de prédosage (2) comprend un rotor (10), dont l'axe de rotation forme avec l'axe de rotation du dispositif de transport (8) un angle inférieur à 10°,
**caractérisé en ce que** l'unité de prédosage comprend un sas pour le matériau granulaire, qui peut être entraîné par le rotor (10).

2. Dispositif de dosage selon la revendication 1, dans lequel le rotor (10) de l'unité de prédosage (2) et le dispositif de transport (8) peuvent être entraînés par un entraînement commun.

3. Dispositif de dosage selon la revendication 2, dans lequel le rotor (10) de l'unité de prédosage (2) peut être entraîné directement par l'entraînement commun.

4. Dispositif de dosage selon l'une quelconque des revendications précédentes, dans lequel l'unité de prédosage (2) comprend une vis sans fin, qui peut être entraînée par le rotor (10).

5. Dispositif de dosage selon l'une quelconque des revendications 1 à 3, dans lequel l'unité de prédosage (2) comprend un filet intérieur, qui peut être entraîné par le rotor (10).

6. Dispositif de dosage selon l'une quelconque des revendications précédentes, dans lequel l'unité de prédosage (2) est configurée de telle manière que du matériau granulaire puisse être conduit au choix directement, en contournant le dispositif de transport (8), à un dispositif de déchargement se raccordant au dispositif de dosage.

7. Dispositif de dosage selon l'une quelconque des revendications précédentes, dans lequel l'unité de prédosage (2) comprend un réservoir de collecte (4) pour du matériau granulaire.

8. Dispositif de dosage selon la revendication 7, dans lequel le réservoir de collecte (4) est par ailleurs raccordé au boîtier (1) par une conduite de retour (5), par laquelle des grains du matériau granulaire peuvent être transportés du boîtier (1) au réservoir de collecte (4).

9. Système de rechargement pour du matériau granulaire, comprenant:
un réservoir de stockage central pour conserver le matériau granulaire;
un dispositif de dosage selon l'une quelconque des revendications précédentes; et
un canal de transport pneumatique pour le transport pneumatique de matériau granulaire du réservoir de stockage au dispositif de dosage.

10. Semoir comprenant un dispositif de dosage selon l'une quelconque des revendications 1 à 8.

11. Semoir comprend un système de rechargement selon la revendication 9.
